# EUROPEAN PATENT APPLICATION

(11) **EP 2 565 330 A1**
(43) Date of publication of application: **06.03.2013**
(21) Application number: 11774890.5
(22) Date of filing: 20.04.2011
(51) Int. Cl.: E02F 9/00, B60R 16/04

(54) **CONSTRUCTION MACHINE**

(30) Priority: 26.04.2010 JP 2010100505
(71) Applicant: Hitachi Construction Machinery Co., Ltd., Bunkyo-ku Tokyo 112-0004 (JP)
(72) Inventor: MAMADA Tomonori, Tsuchiura-shi Ibaraki 300-0013 (JP); HIRASAWA Shigeru, Tsuchiura-shi Ibaraki 300-0013 (JP); HIROKI Satoshi, Tsuchiura-shi Ibaraki 300-0013 (JP); MATSUMOTO Tetsuya, Tsuchiura-shi Ibaraki 300-0013 (JP)
(74) Representative: MERH-IP Matias Erny Reichl Hoffmann
(86) International application number: PCT/JP2011/059747
(87) International publication number: WO 2011/136107

(57) **Abstract**

Two batteries (14) are fixed to a revolving frame (5) by using a battery fixing device (21). The battery fixing device (21) is formed of a battery platform (22) which is fixed to the revolving frame (5) and on which the batteries (14) are placed with a gap (S) left between them, a bending portion (23) which is provided in the battery platform (22) on the side of the back surfaces of the batteries (14) and positions the back surfaces of the batteries (14), an insertion hole (25) for hooking provided in the battery platform (22) in a position corresponding to the gap (S) between the batteries (14) lying next to each other, a grip bracket (26) disposed across upper-end corner portions of front surfaces of the batteries (14) lying next to each other, and a J bolt (29) that is placed through the gap (S) between the batteries (14) lying next to each other and connects the grip bracket (26) and the insertion hole (25) for hooking. This makes it possible to fix the two batteries (14) firmly with a small number of components.

## Description

### TECHNICAL FIELD

The present invention relates to construction machines such as a hydraulic excavator and a hydraulic crane, and, in particular, to a construction machine provided with a battery which serves as a power supply of electrical apparatuses including an engine.

### BACKGROUND ART

In general, a hydraulic excavator as a typical example of a construction machine is formed of an automotive lower traveling structure, an upper revolving structure that is swingably mounted on the lower traveling structure, and a working mechanism liftably provided at the front of the upper revolving structure, and performs, for example, earth and sand excavation by moving the working mechanism upward and downward.

The upper revolving structure is formed mainly of a revolving frame serving as a base, a cab that is provided in a left frontal part of the revolving frame and forms an operator's room, a counterweight that is provided at a back end of the revolving frame to achieve the balance with the working mechanism, onboard equipments such as an engine, a heat exchanger, a hydraulic pump, a battery and so forth which are installed in front of the counterweight, and a housing cover that accommodates these onboard equipments such as an engine.

Here, the battery serving as a power supply of the electrical apparatuses including the engine is mounted on the upper revolving structure, for example, by using a battery fixing device formed of a platform, a battery retainer, a fixing pole, and the like (Patent Document 1: Japanese Patent Laid-Open No. 2006-82682 A).

### SUMMARY OF THE INVENTION

Incidentally, in the conventional art described above, two batteries are fixed to the platform of the battery fixing device by using a battery retainer to which two angles are fastened and two fixing poles. As a result, the number of components is increased, resulting in an increase in the number of assembly processes and component cost.

On the other hand, for example, when two batteries are fixed by using one fixing pole, if the battery retainer and the fixing pole, for example, of the conventional art are used without change, adequate battery fixation strength and adequate stiffness of the battery retainer may not be achieved.

The present invention has been made in view of the above-described problems of the conventional art, and an object thereof is to provide a construction machine that can firmly fix a plurality of batteries by using a small number of components.

(1) To solve the problems described above, the present invention is applied to a construction machine comprising a frame which forms a supporting structure and to which a working mechanism is attached; an engine provided on the frame; a plurality of batteries mounted on the frame and serving as a power supply of electrical apparatuses including the engine; and a battery fixing device which fixes the batteries to the frame.

A feature of the configuration adopted by the present invention is that the battery fixing device is formed of a battery platform which is fixed to the frame and on which two batteries lying next to each other among the batteries are placed with a gap left between the batteries, a back surface positioning portion provided in the battery platform on the side of back surfaces of the batteries placed on the battery platform for positioning the back surfaces of the batteries, a connector locking portion provided in the battery platform in a position corresponding to the gap between the batteries lying next to each other, a grip bracket disposed across upper-end corner portions of front surfaces side of the batteries lying next to each other, and a connector fixing the batteries between the back surface positioning portion and the grip bracket by being placed through the gap between the batteries lying next to each other and connecting the grip bracket and the connector locking portion.

With this arrangement, since a configuration in which the batteries lying next to each other are collectively fixed to the battery platform by using the connector placed through the gap between the two batteries lying next to each other is adopted, as compared to the conventional art, it is possible to reduce the number of components of the battery fixing device and reduce the number of assembly processes and component cost. Moreover, since a configuration in which the batteries are sandwiched and held between the grip bracket and the back surface positioning portion by using the connector is adopted, it is possible to fix the batteries to the battery platform firmly.

(2) According to the present invention, the back surface positioning portion is formed as a projection provided on a top surface of the battery platform. With this arrangement, it is possible to position the back surfaces of the batteries reliably with a simple configuration.

(3) According to the present invention, side surface positioning portions positioning left and right side surfaces of the batteries placed on the battery platform are provided in the battery platform. With this arrangement, it is possible to prevent the left and right side surfaces of the batteries from shifting by using the side surface positioning portions and fix the batteries reliably.

(4) According to the present invention, the connector is formed as a J bolt having, at one end thereof, a hook portion which is locked in the connector locking portion and having, at the other end thereof, a male screw portion on which a nut for fixing the grip bracket is threadably mounted. With this arrangement, it is possible to connect the connector locking portion and the grip bracket reliably.

(5) In item (4) described above, in the present invention, the connector locking portion is formed as an insertion hole for hooking provided in the battery platform. With this arrangement, by making the hook portion of the J bolt engage in the insertion hole for hooking, it is possible to sandwich and hold the batteries between the grip bracket and the back surface positioning portion reliably by using the J bolt.

(6) In item (5) described above, in the present invention, the connector locking portion is formed as two insertion holes provided in the battery platform in such a way that the hook portion of the J bolt engages the battery platform. With this arrangement, it is possible to make the hook portion of the J bolt engage in the two insertion holes firmly.

(7) In item (6) described above, in the present invention, a guide member guiding the hook portion when the hook portion of the J bolt is hooked in the insertion holes is provided in a position on an under surface of the battery platform and corresponding to the insertion holes. With this arrangement, it is possible to hook the hook portion of the J bolt in the insertion holes easily and ensure greater easiness in assembly.

(8) In item (4) described above, in the present invention, the connector locking portion can be formed as a hook for hooking provided on a top surface of the battery platform. With this arrangement, by making the hook portion of the J bolt engage in the hook for hooking, it is possible to sandwich and hold the batteries reliably between the grip bracket and the back surface positioning portion by using the J bolt.

(9) According to the present invention, three batteries are placed on the battery platform with gaps left between the batteries, and by placing one connector through one gap of the gaps between the batteries lying next to each other from the upper-end corner portions of the front surfaces of the batteries to the back surfaces of the batteries and placing another connector through another gap of the gaps between the batteries lying next to each other from the upper-end corner portions of the back surfaces of the batteries to the front surfaces of the batteries, the one connector and the another connector are disposed in positions in which the one connector and the another connector cross each other. With this arrangement, it is possible to fix the three batteries to the battery platform more firmly.

(10) According to the present invention, a cover covering top surfaces of the batteries can be attached to the grip bracket. With this arrangement, it is possible to attach the cover stably to the top surfaces of the batteries and prevent rainwater and foreign matter from adhering to the batteries and thereby increase the reliability of the batteries.

### BRIEF DESCRIPTION OF THE DRAWINGS

Fig. 1 is a front view showing a hydraulic excavator according to a first embodiment of the present invention.
Fig. 2 is a plan view of the hydraulic excavator viewed from above.
Fig. 3 is a plan view showing a state in which a battery fixing device, batteries, and a cover are mounted on a frame.
Fig. 4 is a perspective view showing principal portions of the frame, the battery fixing device, the batteries, the cover, and the like in Fig. 3.
Fig. 5 is a perspective view showing the batteries and the battery fixing device.
Fig. 6 is an exploded perspective view of the batteries, the battery fixing device, and the cover.
Fig. 7 is a plan view showing the batteries and the battery fixing device.
Fig. 8 is a sectional view of the battery and the battery fixing device viewed from a direction of arrows VIII-VIII in Fig. 7.
Fig. 9 is an exploded perspective view showing batteries and a battery fixing device according to a second embodiment of the present invention.
Fig. 10 is an exploded perspective view showing batteries and a battery fixing device according to a third embodiment of the present invention.
Fig. 11 is a perspective view showing batteries and a battery fixing device according to a fourth embodiment of the present invention.
Fig. 12 is a plan view of Fig. 11, showing the batteries and the battery fixing device.
Fig. 13 is a plan view showing batteries and a battery fixing device according to a fifth embodiment of the present invention.
Fig. 14 is a sectional view of the battery and the battery fixing device viewed from a direction of arrows XIV-XIV in Fig. 13.
Fig. 15 is an exploded perspective view showing batteries and a battery fixing device according to a sixth embodiment of the present invention.
Fig. 16 is a sectional view showing the battery and the battery fixing device in the same positions as those in Fig. 8.
Fig. 17 is a perspective view showing principal portions of the battery fixing device.
Fig. 18 is an exploded perspective view showing batteries and a battery fixing device according to a seventh embodiment of the present invention.
Fig. 19 is a sectional view showing the battery and the battery fixing device in the same positions as those in Fig. 8.
Fig. 20 is a perspective view showing principal portions of the battery fixing device.
Fig. 21 is a perspective view showing a battery platform, a guide member, and the like viewed from below in Fig. 20.
Fig. 22 is a perspective view showing a battery fixing device according to a first modified example of the present invention, the battery fixing device in the same position as that in Fig. 20.
Fig. 23 is a perspective view showing a battery platform, a guide member, and the like viewed from below in Fig. 22.
Fig. 24 is a perspective view showing a battery fixing device according to a second modified example of the present invention in the same position as that in Fig. 20.
Fig. 25 is a perspective view showing a battery platform, a guide member, and the like viewed from below in Fig. 24.
Fig. 26 is a sectional view showing a battery and a battery fixing device according to a third modified example of the present invention in the same positions as those in Fig. 8.
Fig. 27 is a plan view similar to Fig. 2, showing batteries, a battery fixing device, and the like according to a fourth modified example of the present invention.

### MODE FOR CARRYING OUT THE INVENTION

Hereinafter, embodiments of a construction machine according to the present invention will be described in detail with reference to the accompanying drawings, taking as an example a case in which the embodiments are applied to a hydraulic excavator.

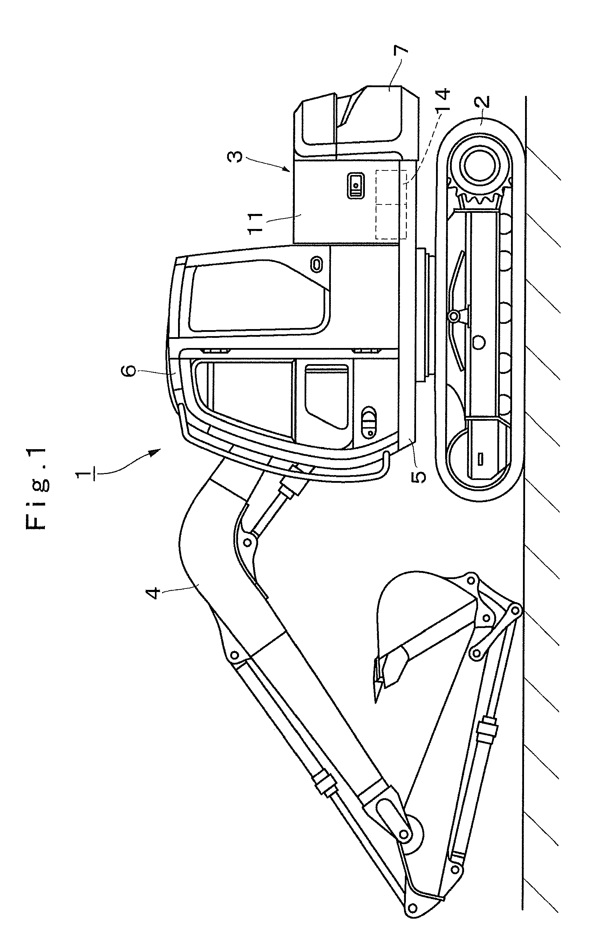

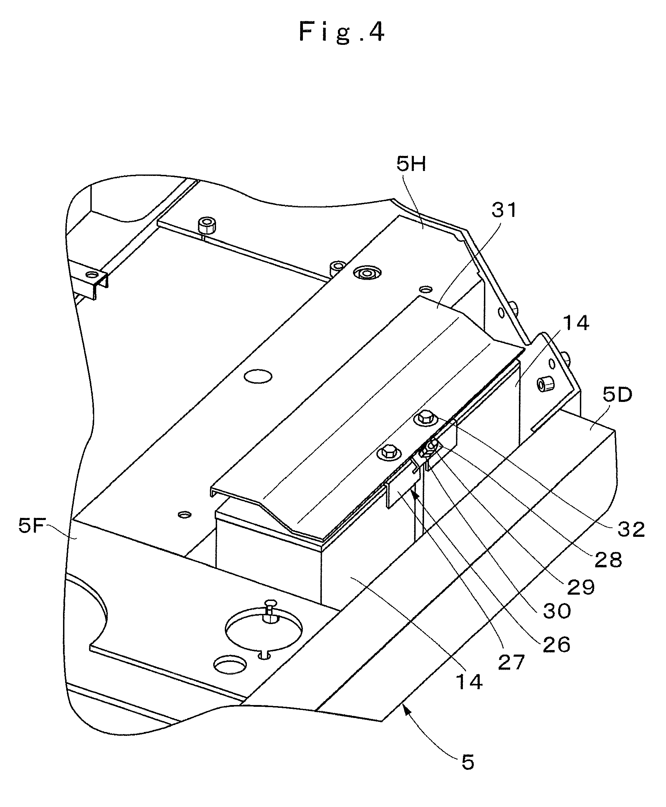

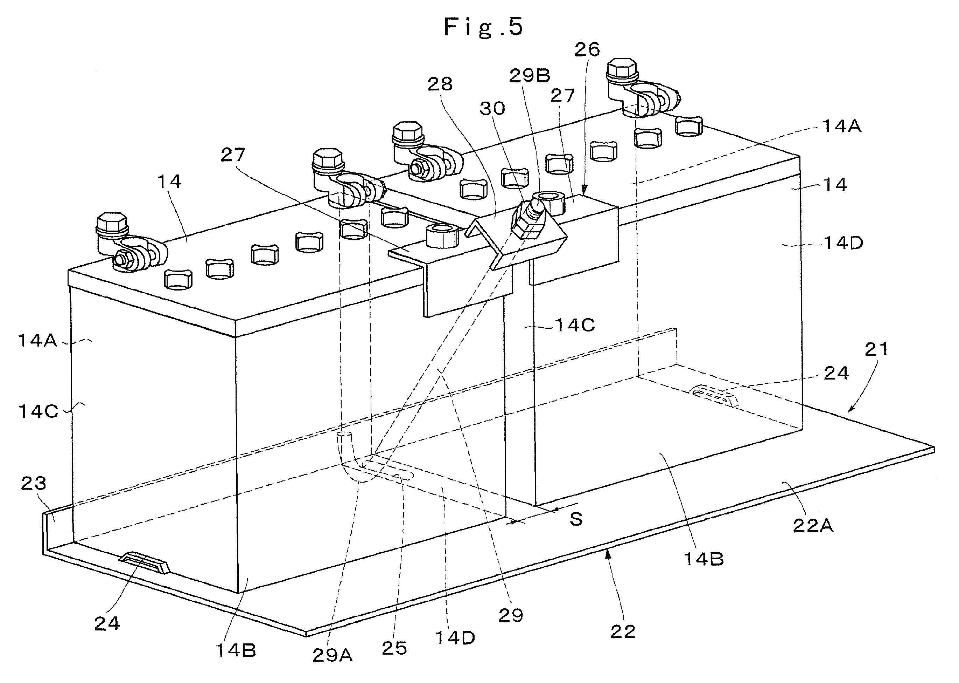

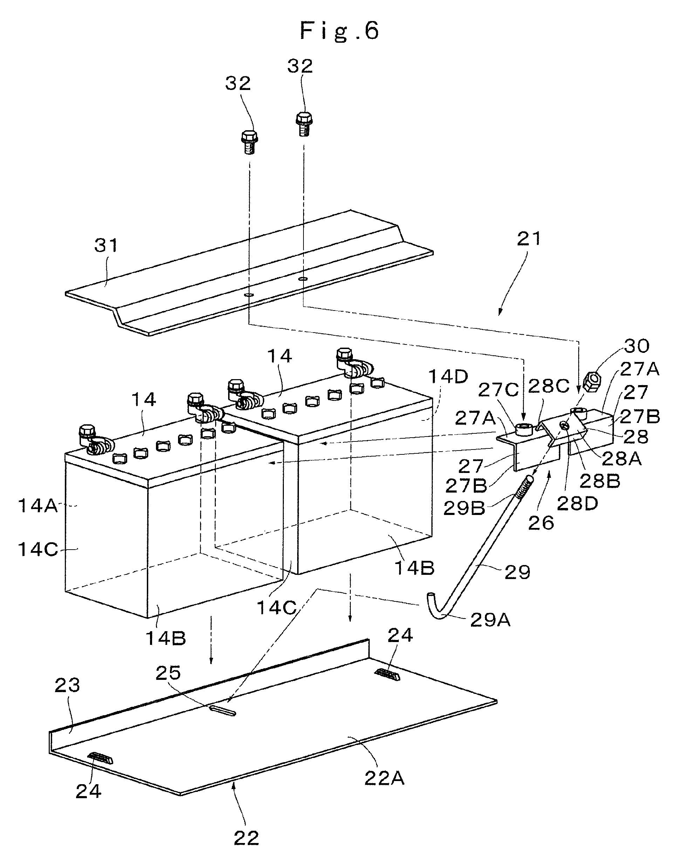

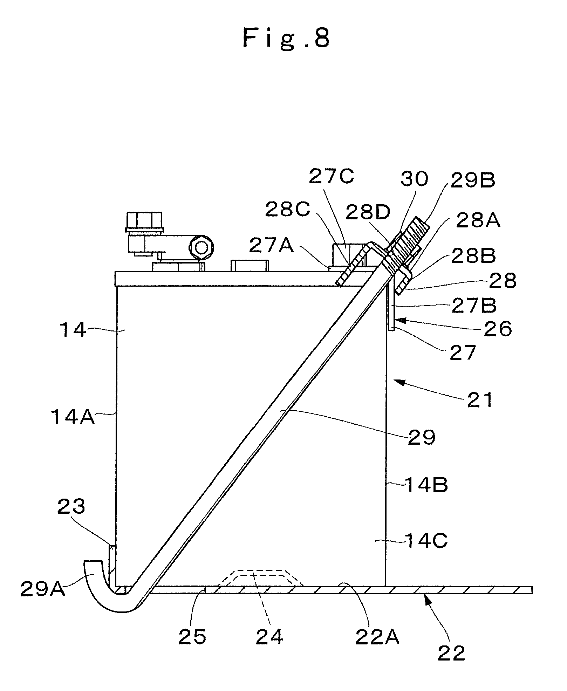

Figs. 1 to 8 show a first embodiment of a construction machine according to the present invention.

In the drawings, indicated at 1 is a hydraulic excavator as a typical example of the construction machine. The hydraulic excavator 1 is formed mainly of an automotive crawler type lower traveling structure 2, an upper revolving structure 3 that is swingably mounted on the lower traveling structure 2, and a working mechanism 4 liftably provided at the front of the upper revolving structure 3, and is suitably used for performing earth and sand excavation and the like. The upper revolving structure 3 is formed of a revolving frame 5, a cab 6, a counterweight 7, an engine 8, batteries 14, a battery fixing device 21, and the like, which will be described later.

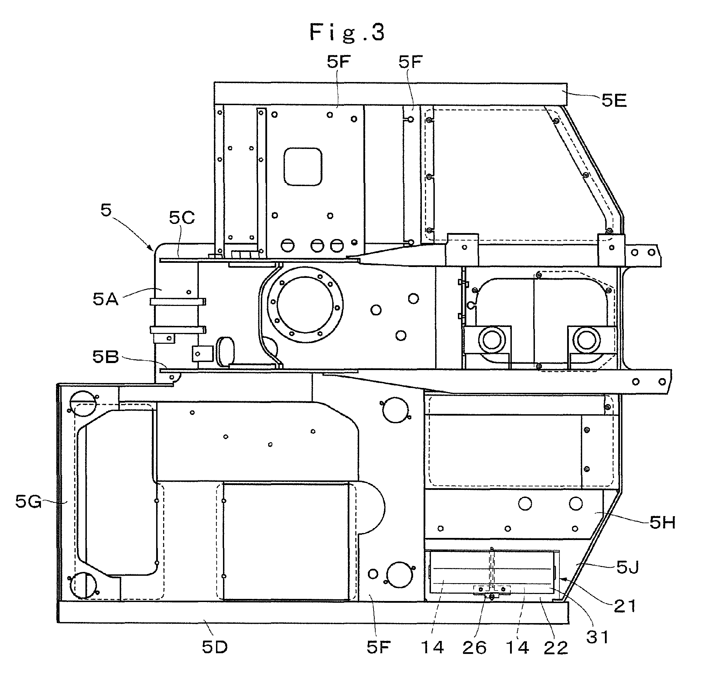

Denoted at 5 is the revolving frame as a frame serving as a base of the upper revolving structure 3, and the revolving frame 5 forms a strong supporting structure. As shown in Fig. 3, the revolving frame 5 is formed mainly of a bottom plate 5A formed of a thick steel sheet or the like that extends in front and rear directions, a left vertical plate 5B and a right vertical plate 5C that are vertically provided on the bottom plate 5A and extend in the front and rear directions while facing each other with a predetermined space left between them in left and right directions, a left side frame 5D that is disposed on the left side of the left vertical plate 5B and extends in the front and rear directions, a right side frame 5E that is disposed on the right side of the right vertical plate 5C and extends in the front and rear directions, and a plurality of extension beams 5F that connect the bottom plate 5A, the left vertical plate 5B, and the left side frame 5D and connect the bottom plate 5A, the right vertical plate 5C, and the right side frame 5E.

At the front of the left and right vertical plates 5B and 5C, the base end side of the working mechanism 4 is rotatably attached, and, at the back of the left and right vertical plates 5B and 5C, the counterweight 7, the engine 8, and the like, which will be described later, are attached. Between the left vertical plate 5B and the left side frame 5D, a cab support frame 5G that supports the cab 6, which will be described later, is provided, and, behind the cab support frame 5G, a heat exchanger support base 5H that supports a heat exchanger 10, which will be described later, is provided. Furthermore, between the heat exchanger support base 5H and the left side frame 5D, a support plate 5J that supports a battery platform 22 of the battery fixing device 21, which will be described later, is provided.

Indicated at 6 is the cab provided in the front of the revolving frame 5 in the left side thereof, and the cab 6 is supported on the cab support frame 5G of the revolving frame 5 and forms an operator's room. Inside the cab 6, an operator's seat in which an operator sits, an operating lever for driving, an operating lever for conducting work (of which none is illustrated) are provided.

Indicated at 7 is the counterweight provided at a back end of the revolving frame 5, and the counterweight 7 achieves the weight balance with the working mechanism 4.

Denoted at 8 is the engine mounted in front of the counterweight 7, and the engine 8 is transversely disposed so as to extend in left and right directions. On the left side of the engine 8, a cooling fan 8A supplying cooling air to the heat exchanger 10, which will be described later, is provided, and, on the right side of the engine 8, a hydraulic pump 9, which will be described later, is attached.

Indicated at 9 is the hydraulic pump attached on the right side of the engine 8, and the hydraulic pump 9 is driven by the engine 8. The hydraulic pump 9 supplies operational pressure oil toward various types of hydraulic actuators provided in the lower traveling structure 2, the upper revolving structure 3, and the working mechanism 4.

Indicated at 10 is the heat exchanger provided on the left side of the engine 8 so as to face the cooling fan 8A, and the heat exchanger 10 is fixed to the heat exchanger support base 5H of the revolving frame 5. The heat exchanger 10 is formed of a radiator that cools engine cooling water, an oil cooler that cools operating oil, an intercooler that cools the air compressed by a turbosupercharger (not shown), and the like.

Indicated at 11 is the housing cover covering the engine 8 and the like which are provided in front of the counterweight 7. The housing cover 11 is formed of an upper side surface cover 11A covering the engine 8, the hydraulic pump 9, the heat exchanger 10, the batteries 14, and the like from above, a left side surface cover 11B that is provided between a left end of the counterweight 7 and the cab 5 in an openable and closable manner and covers the heat exchanger 10, the batteries 14, and the like from the left side, and a right side surface cover 11C that is provided between a right end of the counterweight 7 and a fuel tank 13, and covers the engine 8, the hydraulic pump 9, and the like from the right side.

Indicated at 12 is an operating oil tank provided in the front of the revolving frame 5 in the right side thereof, and the operating oil tank 12 stores the operating oil, which is supplied to various types of hydraulic actuators mounted on the hydraulic excavator 1. Indicated at 13 is the fuel tank provided in front of the operating oil tank 12, and the fuel tank 13 stores fuel which is supplied to the engine 8.

Designated at 14 are the two batteries mounted in the back of the revolving frame 5 in the left side thereof by using the battery fixing device 21 which will be described later. The batteries 14 store electric energy and serve as power supplies of electrical apparatuses (not shown) such as a starter motor and a plug which are attached to the engine 8 and electrical apparatuses (not shown) such as various types of lighting apparatuses, solenoid valves, and electronic components which are mounted on the hydraulic excavator 1.

Next, the battery fixing device 21 for fixing the batteries 14 to the revolving frame 5 will be described.

Namely, designated at 21 is the battery fixing device that fixes the batteries 14 to the revolving frame 5, and the battery fixing device 21 is provided in the back of the revolving frame 5 in the left side thereof, more specifically, between the left side frame 5D and the heat exchanger support base 5H forming the revolving frame 5. Here, the battery fixing device 21 is formed mainly of the battery platform 22, a bending portion 23, side surface positioning portions 24, an insertion hole 25, a grip bracket 26, a J bolt 29, and a battery cover 31 which will be described later.

Denoted at 22 is the battery platform on which the two batteries 14 lying next to each other are placed with a gap left between them, and the battery platform 22 is formed by bending a metal plate material such as a steel sheet, boring holes therein, and the like, and is fixed to the support plate 5J forming the revolving frame 5. Here, the battery platform 22 is formed of a placing portion 22A that extends in the front and rear directions of the hydraulic excavator 1 and has a top surface on which the batteries 14 are placed and the bending portion 23 protruding upward from the top surface (the placement surface) of the placing portion 22A. On the placing portion 22A of the battery platform 22, the batteries 14 are placed in series in the front and rear directions of the hydraulic excavator 1.

In this case, when, as for the surfaces of the batteries 14, the surfaces at which the batteries 14 abut on the bending portion 23 (the right side surfaces with respect to the left and right directions of the hydraulic excavator 1) are defined as back surfaces 14A, the surfaces to which the grip bracket 26 is attached (the left side surfaces with respect to the left and right directions of the hydraulic excavator 1) are defined as front surfaces 14B, the left side surfaces with respect to the front surfaces 14B (the front surfaces with respect to the front and rear directions of the hydraulic excavator 1) are defined as left side surfaces 14C, and the right side surfaces with respect to the front surfaces 14B (the back surfaces with respect to the front and rear directions of the hydraulic excavator 1) are defined as right side surfaces 14D, the batteries 14 are placed on the placing portion 22A of the battery platform 22 in a state in which a gap S is provided between the left side surface 14C of one battery 14 and the right side surface 14D of the other battery 14.

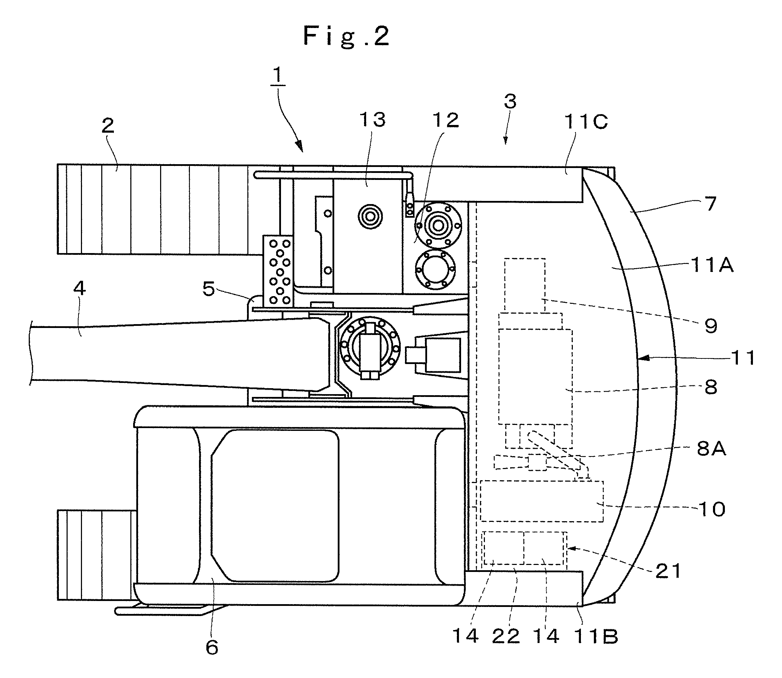

Denoted at 23 is the bending portion as a back surface positioning portion which is located on the side of the back surface 14A of each of the batteries 14 placed on the battery platform 22 and is provided on the battery platform 22. The bending portion 23 positions the back surfaces 14A of the batteries 14. Here, the bending portion 23 is formed as a projection integrated with the battery platform 22 on the top surface of the battery platform 22. Namely, the bending portion 23 is formed by bending an edge of the battery platform 22 of the back surface 14A side of each battery 14 at a right angle toward the top surface side of the placing portion 22A. Further, by abutting on the back surfaces 14A of the batteries 14, the bending portion 23 prevents each battery 14 from shifting to the back surface 14A side (to the side where the heat exchanger 10 shown in Fig. 2 is located).

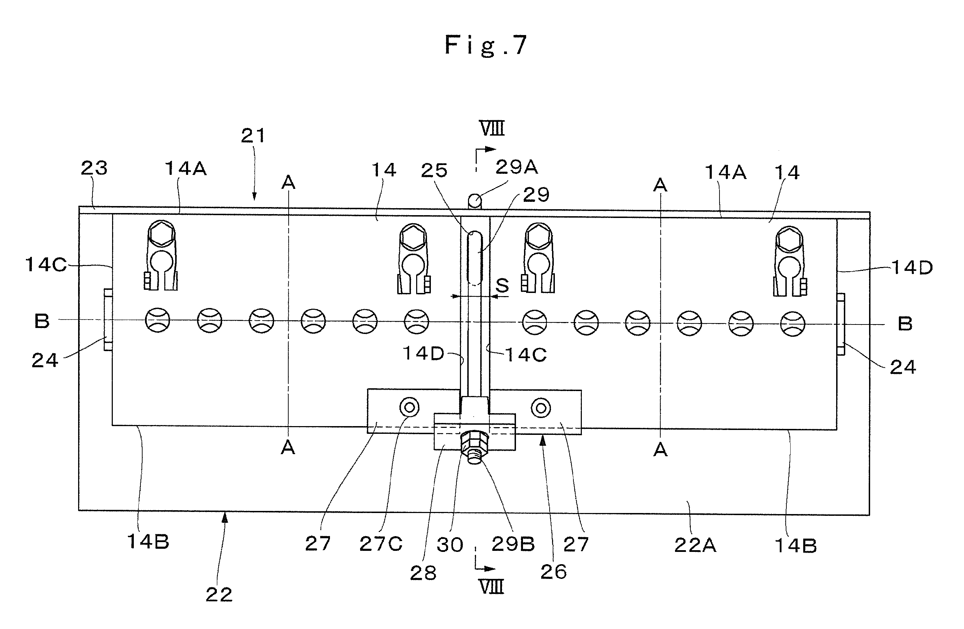

Denoted at 24 is a pair of side surface positioning portions provided at the both ends of the battery platform 22 in the longitudinal direction, and the side surface positioning portions 24 position the left and right side surfaces 14C and 14D of the batteries 14 placed on the battery platform 22. Here, as shown in Fig. 7, when straight lines extending from the back surfaces 14A to the front surfaces 14B of the batteries 14 are defined as straight lines A-A and a straight line which is orthogonal to the straight lines A-A and longitudinally extends from the left side surface 14C to the right side surface 14D of the batteries 14 is defined as a straight line B-B, the side surface positioning portions 24 are provided on the straight line B-B.

On the other hand, by making part of the placing portion 22A of the battery platform 22 protrude from below toward the top surface, each side surface positioning portion 24 is formed integrally with the placing portion 22A. In this case, by abutting on the left side surface 14C of one battery 14 and abutting on the right side surface 14D of the other battery 14, the side surface positioning portions 24 prevent the batteries 14 from moving in a longitudinal direction (in the front and rear directions of the hydraulic excavator 1) indicated by the straight line B-B in Fig. 7.

Denoted at 25 is the insertion hole for hooking which is located in the gap S between the batteries 14 lying next to each other and is provided in the battery platform 22. The insertion hole 25 is a specific example of a connector locking portion according to the present invention and is provided for locking (hooking) a hook portion 29A of the J bolt 29 which will be described later. Here, the insertion hole 25 is located in the placing portion 22A of the battery platform 22 in a position closer to the bending portion 23, and the hook portion 29A of the J bolt 29 is placed through the insertion hole 25 and is hooked between an edge of the insertion hole 25 and the bending portion 23. Therefore, one end of the J bolt 29 is locked by the insertion hole 25 of the battery platform 22.

Denoted at 26 is the grip bracket disposed across upper-end corner portions of the front surfaces 14B of the batteries 14 lying next to each other. The grip bracket 26 is formed by integrally combining two abutting pieces 27 and one connecting piece 28 connecting the abutting pieces 27 and fixing them firmly.

Here, each abutting piece 27 is formed by, for example, bending a plate material in a substantially L-letter shape and is formed of an upper surface 27A extending in a horizontal direction along the top surface of each battery 14 and a front surface 27B extending in a vertical direction along the front surface 14B of each battery 14. In the upper surface 27A, a screw tube 27C for fixing the battery cover 31, which will be described later, is provided.

On the other hand, the connecting piece 28 is formed by, for example, bending a plate-like member in a substantially U-letter shape. The connecting piece 28 is formed of a J-bolt mounting portion 28A which extends diagonally with respect to the upper surfaces 27A of the abutting pieces 27 and to which the J bolt 29 is attached, a front side leg portion 28B which extends from the J-bolt mounting portion 28A to the front surfaces 27B of the abutting pieces 27 and both ends of which are firmly fixed to the front surfaces 27B by welding, and an upper side leg portion 28C which extends from the J-bolt mounting portion 28A to the upper surfaces 27A of the abutting pieces 27, both ends of which are firmly fixed to the upper surfaces 27A by welding, and a middle part of which sticks out of the gap S between the batteries 14 through a space between the abutting pieces 27. Furthermore, in the J-bolt mounting portion 28A, a mounting hole 28D through which a male screw portion 29B of the J bolt 29 is placed is provided.

Denoted at 29 is the J bolt as a connector, which is placed through the gap S between the batteries 14 lying next to each other, and the J bolt 29 is formed as a whole in a J-letter shape as a result of the hook portion 29A being provided at one end. Here, the hook portion 29A connects the battery platform 22 and the grip bracket 26 by being placed through the insertion hole 25 of the battery platform 22 and hooked between the edge of the insertion hole 25 and the bending portion 23. Moreover, at the other end of the J bolt 29, the male screw portion 29B on which a pair of nuts 30 for fixing the grip bracket 26 is threadably mounted is provided.

Further, to attach the Jbolt 29, the Jbolt 29 is diagonally disposed (placed through) in the gap S between the batteries 14 lying next to each other, more specifically, in the direction of diagonals of the left and right side surfaces 14C and 14D of the batteries 14. Next, the hook portion 29A of the J bolt 29 is locked by the insertion hole 25 of the battery platform 22, the male screw portion 29B of the J bolt 29 is placed through the mounting hole 28D of the grip bracket 26, and, in this state, the nuts 30 are threadably mounted on the male screw portion 29B. In this way, the grip bracket 26 and the battery platform 22 are connected via the J bolt 29 diagonally disposed between the grip bracket 26 and the battery platform 22. As a result, the two batteries 14 can be sandwiched and held between the grip bracket 26 and the bending portion 23, and it is possible to fix the batteries 14 firmly on the placing portion 22A of the battery platform 22 in a state in which a force by which the two batteries 14 are pressed against the bending portion 23 of the battery platform 22 and a force by which the two batteries 14 are pressed against the placing portion 22A of the battery platform 22 are made to act concurrently on the two batteries 14 by using one J bolt 29.

Denoted at 31 is the battery cover as a cover that covers the top surfaces of the batteries 14, and the battery cover 31 is attached to the grip bracket 26 by using a bolt 32 that is threadably mounted on the screw tube 27C of the grip bracket 26. As described above, by covering each battery 14 with the battery cover 31, rainwater and foreign matter are prevented from adhering to the batteries 14.

The hydraulic excavator 1 according to the first embodiment has the configuration described above and next, the operation thereof is described.

An operator sits in the operator's seat in the cab 6 and operates the lever for driving in this state, whereby the operator can drive the lower traveling structure 2. On the other hand, by operating the lever for conducting work, the operator can perform earth and sand excavation or the like by moving the working mechanism 4 upward and downward.

Here, the two batteries 14 supply electric current to the electrical apparatuses such as the engine 8, various types of lighting apparatuses, solenoid valves, and electronic components when the hydraulic excavator 1 is operating, and the batteries 14 are fixed to the revolving frame 5 by using the battery fixing device 21 described above. In this case, since the two batteries 14 are collectively fixed to the battery platform 22 by one J bolt 29 which is diagonally placed through the gap S between the batteries 14 lying next to each other, it is possible to reduce the number of components of the battery fixing device 21 as compared to the conventional technique and reduce the number of assembly processes and component cost.

Further, the two batteries 14 are sandwiched and held between the grip bracket 26 and the bending portion 23 by using one J bolt 29 diagonally disposed between the bending portion 23 of the battery platform 22 and the grip bracket 26. As a result, the batteries 14 are firmly fixed to the battery platform 22 in a state in which a force by which the batteries 14 are pressed against the bending portion 23 of the battery platform 22 and a force by which the batteries 14 are pressed against the placing portion 22A of the battery platform 22 are made to act concurrently on the batteries 14.

On the other hand, according to the first embodiment, since a configuration in which the side surface positioning portions 24 that position the left and right side surfaces 14C and 14D of the batteries 14 are provided in the battery platform 22 is adopted, it is possible to prevent the left and right side surfaces 14C and 14D of the batteries 14 from shifting by using the side surface positioning portions 24 and fix the batteries 14 reliably in a longitudinal direction (in the front and rear directions of the hydraulic excavator 1).

According to the first embodiment, since a configuration in which the bending portion 23 formed by bending processing is made to abut on the back surfaces 14A of the batteries 14 is adopted, it is possible to position the back surfaces 14A of the batteries 14 reliably with a simple configuration.

According to the first embodiment, the grip bracket 26 is integrally formed of the abutting pieces 27 each having an L-shaped cross-sectional shape and the connecting piece 28 having a U-shaped cross-sectional shape and connecting the abutting pieces 27. As a result, it is possible to provide adequate stiffness of the grip bracket 26 and press down the upper-end corner portions of the front surfaces 14B of the batteries 14 reliably by the grip bracket 26.

Further, according to the first embodiment, since a configuration is adopted in which the hook portion 29A of the J bolt 29 is locked by the insertion hole 25 for hooking and the male screw portion 29B of the J bolt 29 is fixed to the grip bracket 26 by using a pair of nuts 30, the batteries 14 are reliably sandwiched and held between the grip bracket 26 and the bending portion 23 which are connected by using one J bolt 29. In this case, since a configuration is adopted in which the hook portion 29A of the J bolt 29 is hooked between the edge of the insertion hole 25 and the bending portion 23 through the insertion hole 25 for hooking, the bending portion 23 can provide stiffness of a part at which the hook portion 29A is locked. This makes it possible to connect the hook portion 29A of the J bolt 29 and the battery platform 22 more firmly.

Furthermore, according to the first embodiment, since a configuration in which the battery cover 31 is attached to the grip bracket 26 is adopted, it is possible to attach the battery cover 31 to the top surfaces of the batteries 14 stably and prevent rainwater and foreign matter from adhering to the batteries 14. This makes it possible to increase the reliability of the batteries 14.

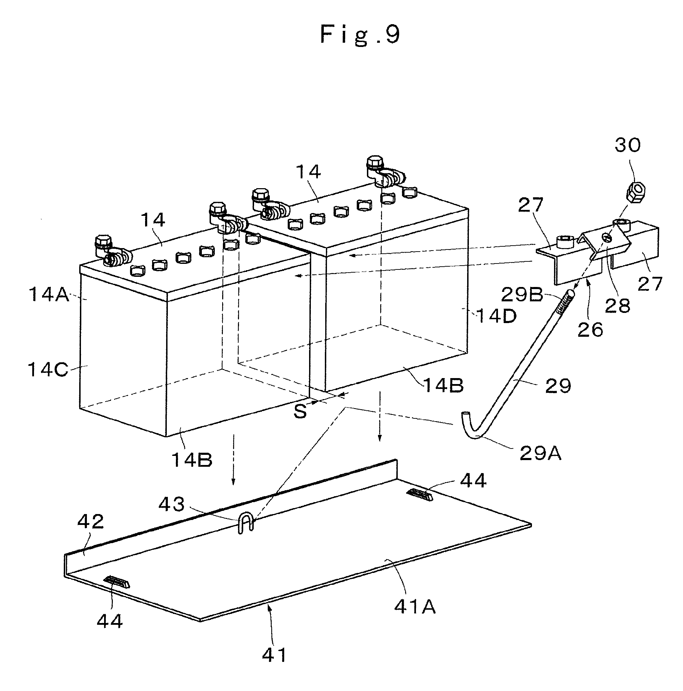

Next, Fig. 9 shows a second embodiment of the present invention. A feature of this embodiment is that a connector locking portion is formed as a hook. Incidentally, in the second embodiment, the component elements that are identical to those of the first embodiment described above will be simply denoted by the same reference numerals to avoid repetitions of similar explanations.

In the drawing, denoted at 41 is a battery platform on which two batteries 14 lying next to each other are placed with a gap left between them, and the battery platform 41 has a placing portion 41A which extends in the front and rear directions of a hydraulic excavator 1 and has a top surface on which the batteries 14 are placed. In the placing portion 41A, a bending portion 42, a hook 43, and side surface positioning portions 44, which will be described later, are provided.

Indicated at 42 is the bending portion as a back surface positioning portion which is located on the side of back surface 14A of each battery 14 and provided in the battery platform 41, and the bending portion 42 is formed in the same manner as the bending portion 23 of the first embodiment described above.

Indicated at 43 is the hook as a connector locking portion provided in the battery platform 41 in a position corresponding to a gap S between the two batteries 14 lying next to each other, and the hook 43 is used in this embodiment in place of the insertion hole 25 according to the first embodiment described above. Here, the hook 43 is formed by bending, for example, a metal rod material in a U-letter shape and is firmly fixed on the placing portion 41A of the battery platform 41 by welding, for example, in a state in which the bent part thereof is located on the upper side. The U-letter shaped hook 43 locks one end of a J bolt 29 by hooking a hook portion 29A of the J bolt 29.

Further, at the both ends of the battery platform 41 in the longitudinal direction, the side surface positioning portions 44 are provided, and, as is the case with the side surface positioning portions 24 of the first embodiment described above, the side surface positioning portions 44 position the left and right side surfaces 14C and 14D of the batteries 14.

The hydraulic excavator according to the second embodiment locks the hook portion 29A of the J bolt 29 in the hook 43 described above, and the basic action thereof is not particularly different from that of the first embodiment described above.

However, according to the second embodiment, since a configuration in which the hook 43 locking the hook portion 29A of the J bolt 29 is provided on the top surface of the battery platform 41 is adopted, it is possible to bring the hook 43 into engagement with the hook portion 29A of the J bolt 29 reliably and shorten the J bolt 29, and thereby achieve weight and cost reduction.

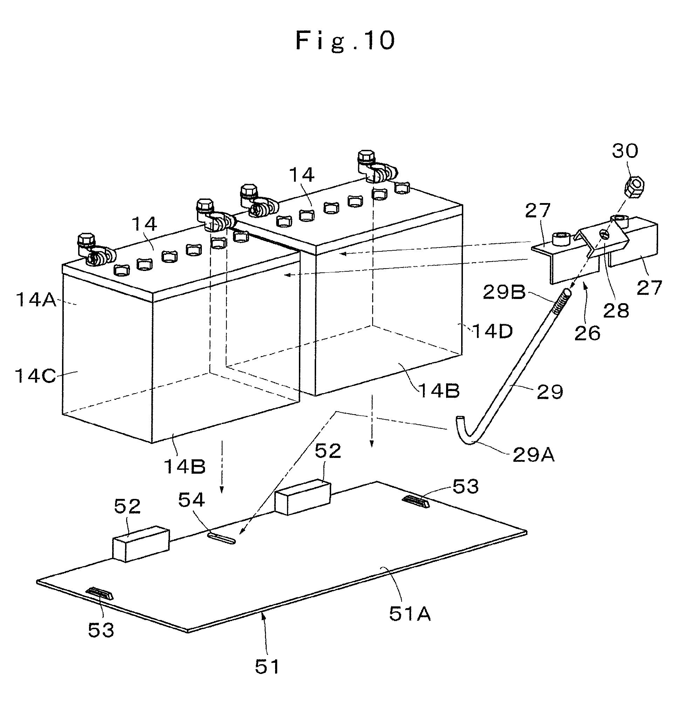

Next, Fig. 10 shows a third embodiment of the present invention. A feature of this embodiment is that a back surface positioning portion is formed as a block body firmly fixed to the top surface of a battery platform. Incidentally, in the third embodiment, the component elements that are identical to those of the first embodiment described above will be simply denoted by the same reference numerals to avoid repetitions of similar explanations.

In the drawing, denoted at 51 is a battery platform on which two batteries 14 lying next to each other are placed with a gap left between them, and the battery platform 51 has a placing portion 51A that extends in the front and rear directions of a hydraulic excavator 1 and has a top surface on which the batteries 14 are placed. In the placing portion 51A, block bodies 52, side surface positioning portions 53, and an insertion hole 54, which will be described later, are provided.

Indicated at 52 are the two block bodies as a back surface positioning portion which are located on the side of the back surface 14A of each of the batteries 14 placed on the battery platform 51 and is provided in the battery platform 51, and the block bodies 52 position the back surfaces 14A of the batteries 14. Here, the block bodies 52 are provided in place of the bending portion 23 according to the first embodiment, and each block body 52 is formed as a projection separately from the battery platform 51 on the top surface of the battery platform 51. That is, each block body 52 is formed as a block obtained by forming a metal material such as steel into a rectangular parallelepiped and is firmly fixed to the placing portion 51A of the battery platform 51 by welding, for example. By abutting on the back surface 14A of each battery 14, each block body 52 prevents each battery 14 from shifting to the side where the back surface 14A is located.

Incidentally, at the both ends of the battery platform 51 in the longitudinal direction, the side surface positioning portions 53 are provided, and the side surface positioning portions 53 position the left and right side surfaces 14C and 14D of the batteries 14. Further, in the battery platform 51, the insertion hole 54 for hooking as a connector locking portion is provided in a position corresponding to a gap S between the batteries 14 lying next to each other, and, as is the case with the insertion hole 25 according to the first embodiment, the insertion hole 54 locks a hook portion 29A of a J bolt 29.

The hydraulic excavator according to the third embodiment positions the back surfaces 14A of the batteries 14 by a pair of block bodies 52 described above, and the basic action thereof is not particularly different from the function of the bending portion 23 according to the first embodiment described earlier.

Therefore, also in the third embodiment, by positioning the back surfaces 14A of the batteries 14 by the block bodies 52, it is possible to sandwich and hold the batteries 14 between the grip bracket 26 and the block bodies 52.

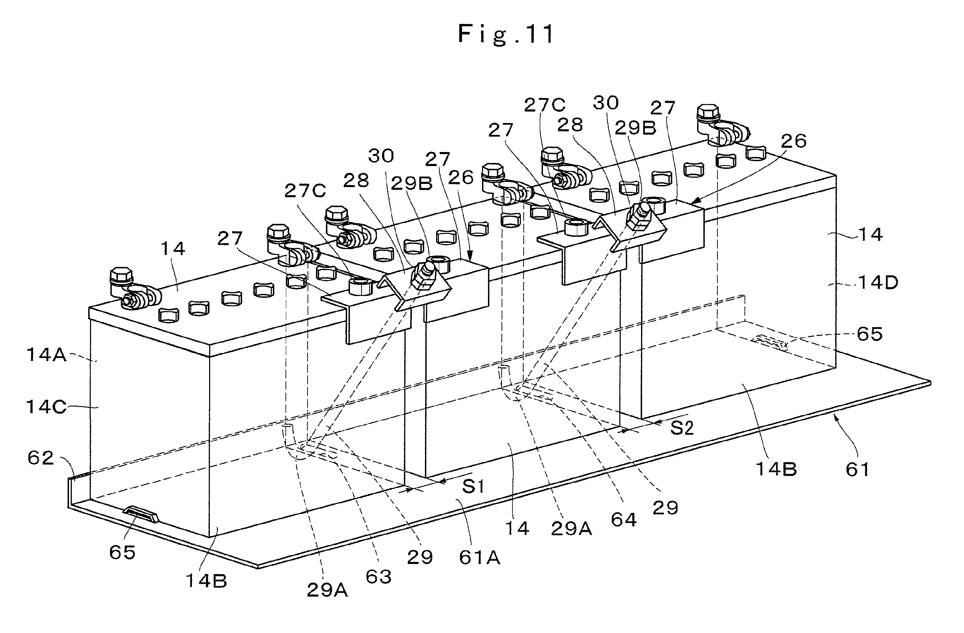

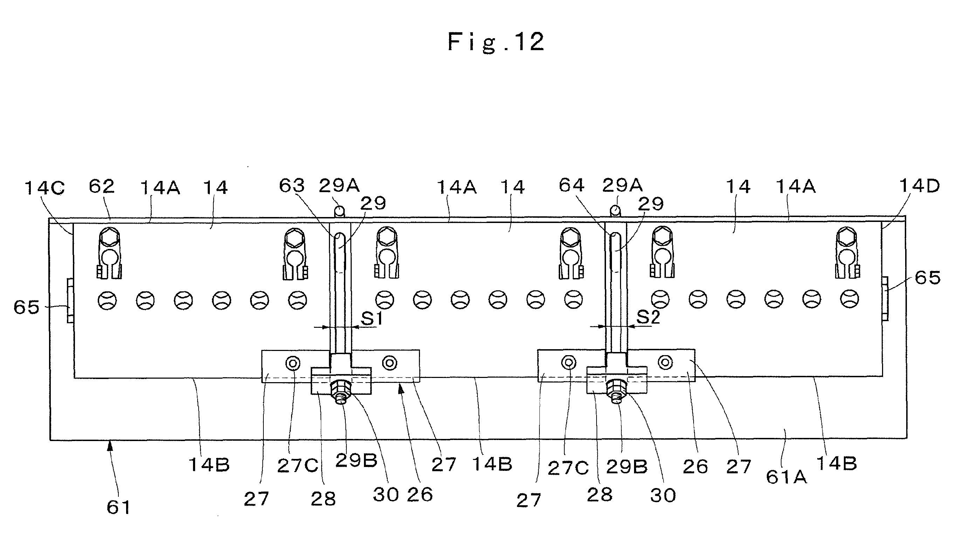

Next, Figs. 11 and 12 show a fourth embodiment of the present invention. A feature of this embodiment is that three batteries are placed on a placing portion of a battery platform. Incidentally, in the fourth embodiment, the component elements that are identical to those of the first embodiment described earlier will be simply denoted by the same reference numerals to avoid repetitions of similar explanations.

In the drawings, denoted at 61 is a battery platform on which three batteries 14 are placed, and the size of the battery platform 61 in the longitudinal direction is made greater than that of the battery platform 22 of the first embodiment described earlier so that the three batteries 14 can be placed thereon. The battery platform 61 has a placing portion 61A that extends in the front and rear directions (the lateral direction of Figs. 11 and 12) of a hydraulic excavator 1 and has a top surface on which the three batteries 14 are placed. In the battery platform 61, a bending portion 62 protruding upward from the top surface of the placing portion 61A and positioning the back surfaces 14A of the batteries 14 is provided.

In this case, on the placing portion 61A of the battery platform 61, the three batteries 14 are placed in series with gaps S1 and S2 left between the batteries 14 lying next to each other. In the battery platform 61, in an area corresponding to the gap S1 between the battery 14 at one end (the left side of Figs. 11 and 12) and the middle battery 14, an insertion hole 63 for hooking as a connector locking portion that locks a hook portion 29A of a J bolt 29 is provided near the bending portion 62 (near the back surfaces 14A of the batteries 14).

On the other hand, in the battery platform 61, also in an area corresponding to the gap S2 between the battery 14 at the other end (the right side of Figs. 11 and 12) and the middle battery 14, an insertion hole 64 for hooking as a connector locking portion that locks a hook portion 29A of another J bolt 29 is provided near the bending portion 62 (near the back surfaces 14A of the batteries 14).

Further, at the upper-end corner portions of the front surfaces 14B of the batteries 14, grip brackets 26 are disposed so as to correspond to the gaps S1 and S2 between the batteries 14 lying next to each other. Through the gaps S1 and S2 of the batteries 14 lying next to each other, the J bolts 29 are placed respectively from the upper-end corner portions of the front surfaces 14B of the batteries 14 to the lower-end corner portions of the back surfaces 14A of the batteries 14, and the three batteries 14 are fixed to the battery platform 61 by using the two J bolts 29 and the two grip brackets 26.

Incidentally, at the both ends of the battery platform 61 in the longitudinal direction, side surface positioning portions 65 are provided respectively, and the side surface positioning portions 65 position the left and right side surfaces 14C and 14D of the batteries 14 located on both sides.

The hydraulic excavator according to the fourth embodiment places the three batteries 14 on the battery platform 61 described above, and the basic action thereof is not particularly different from that of the first embodiment described earlier except for the length of the battery platform 61 in the longitudinal direction, the number of batteries 14, insertion holes 63 and 64, grip brackets 26, and J bolts 29 and the like.

That is, also in the fourth embodiment, it is possible to fix the batteries 14 firmly on the battery platform 61 by using the J bolts 29 and the grip brackets 26. Incidentally, though not illustrated, it is also possible to place four or more batteries on the battery platform. In this case, it is necessary simply to dispose the grip brackets, the connector locking portions (the insertion holes and the hooks), the connectors (the J bolts), and the like in accordance with the number of gaps between the batteries lying next to each other.

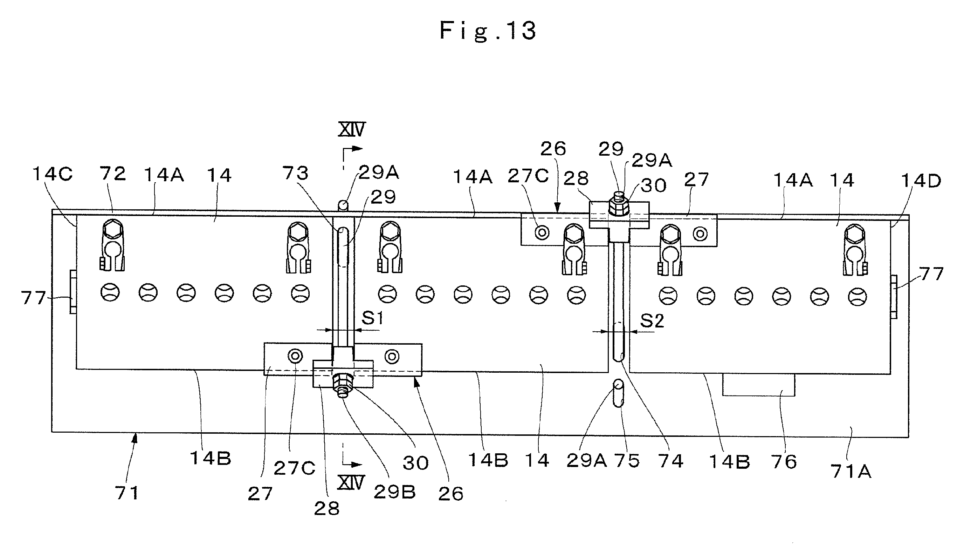

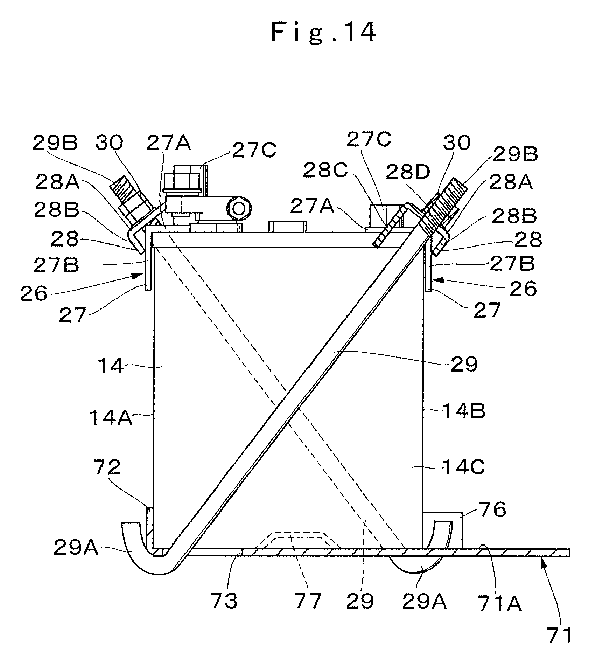

Next, Figs. 13 and 14 show a fifth embodiment of the present invention. A feature of this embodiment is that three batteries are placed on a placing portion of a battery platform and connectors are disposed in such a way that they cross each other. Incidentally, in the fifth embodiment, the component elements that are identical to those of the first embodiment will be simply denoted by the same reference numerals to avoid repetitions of similar explanations.

In the drawings, denoted at 71 is a battery platform on which three batteries 14 are placed, and the size of the battery platform 71 in the longitudinal direction is made greater than that of the battery platform 22 of the first embodiment described earlier so that the three batteries 14 can be placed thereon. The battery platform 71 has a placing portion 71A that extends in the front and rear directions (the lateral direction of Fig. 13) of a hydraulic excavator 1 and has placing portion 71A a top surface on which the three batteries 14 are placed, and, in the battery platform 71, a bending portion 72 protruding upward from the top surface of the placing portion 71A and positioning the back surfaces 14A of the batteries 14 is provided.

In this case, on the placing portion 71A of the battery platform 71, the three batteries 14 are placed with gaps S1 and S2 left between the batteries 14 lying next to each other. In the battery platform 71, in an area corresponding to the gap S1 between the battery 14 at one end (the left side of Fig. 13) and the middle battery 14, an insertion hole 73 for hooking as a connector locking portion which locks a hook portion 29A of a J bolt 29 is provided near the bending portion 72 (near the back surfaces 14A of the batteries 14).

On the other hand, in the battery platform 71, in an area corresponding to the gap S2 between the battery 14 at the other end (the right side of Fig. 13) and the middle battery 14, two insertion holes 74 and 75 for hooking as the connector locking portion that lock a hook portion 29A of a J bolt 29 are provided near the side opposite to the bending portion 72 (near the front surfaces 14B of the batteries 14). The hook portion 29A of the J bolt 29 is placed through these two insertion holes 74 and 75, and these insertion holes make the hook portion 29A engage the battery platform 71. As a result, by placing the hook portion 29A of the J bolt 29 through the front insertion hole 74 and making the tip of the hook portion 29A stick out of the back insertion hole 75, it is possible to hook the hook portion 29A of the J bolt 29 on the battery platform 71 between the insertion holes 74 and 75.

Here, in the gap S1 between the battery 14 at one end (the left side of Fig. 13) and the middle battery 14, a grip bracket 26 is disposed across upper-end corner portions of the front surfaces 14B of these batteries 14. Through the gap S1, the J bolt 29 is placed from the upper-end corner portions of the front surfaces 14B of the batteries 14 to the lower-end corner portions of the back surfaces 14A of the batteries 14.

On the other hand, in the gap S2 between the battery 14 at the other end (the right side of Fig. 13) and the middle battery 14, a grip bracket 26 is disposed across upper-end corner portions of the back surfaces 14A of these batteries 14. Through the gap S2, another J bolt 29 is placed from the upper-end corner portions of the back surfaces 14A of the batteries 14 to the lower-end corner portions of the front surfaces 14B of the batteries 14. As a result, as shown in Fig. 14, the J bolt 29 placed through the gap S1 and the another J bolt 29 placed through the gap S2 are disposed in positions in which they cross each other (in positions in which they form the X-letter shape) when viewed from the left and right side surfaces 14C and 14D of the batteries 14.

Indicated at 76 is a block body that is located on the front surface 14B of the battery 14 at the other end (the right side of Fig. 13) and is provided on the placing portion 71A of the battery platform 71, and the block body 76 positions the front surface 14B of the battery 14 at the other end. Here, the block body 76 is formed as a block obtained by forming a metal material such as steel into a rectangular parallelepiped and is firmly fixed to the placing portion 71A of the battery platform 71 by welding, for example.

Incidentally, at the both ends of the battery platform 71 in the longitudinal direction, side surface positioning portions 77 are provided, and the side surface positioning portions 77 position the left and right side surfaces 14C and 14D of the batteries 14 located on both sides.

The hydraulic excavator according to the fifth embodiment places the three batteries 14 on the battery platform 71 described above, and the basic action thereof is not particularly different from that of the first embodiment described earlier except for the length of the battery platform 71 in the longitudinal direction, the number of batteries 14, insertion holes 73, 74, and 75, grip brackets 26, and J bolts 29 and the like. That is, also in the fifth embodiment, it is possible to fix the batteries 14 firmly on the battery platform 71 by using the J bolts 29 and the grip brackets 26.

Further, according to the fifth embodiment, a configuration in which the J bolt 29 that is placed through the gap S1 and another J bolt 29 that is placed through the gap S2 are disposed in positions in which they cross each other (in positions in which they form the X-letter shape) is adopted. Therefore, as compared to a case in which, as in the fourth embodiment described above, for example, the J bolt 29 that is placed through the gap S1 and another J bolt 29 that is placed through the gap S2 are disposed so as to extend in the same direction, it is possible to fix the three batteries 14 more firmly on the battery platform 71.

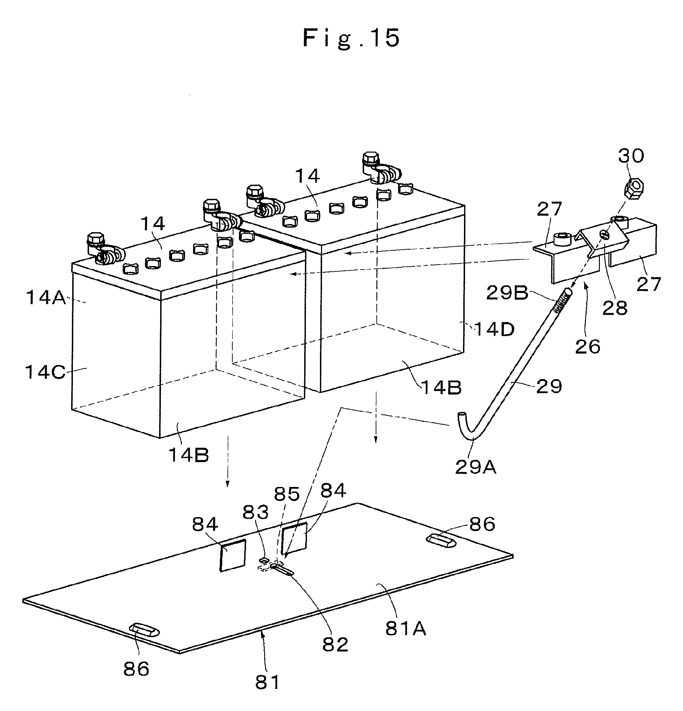

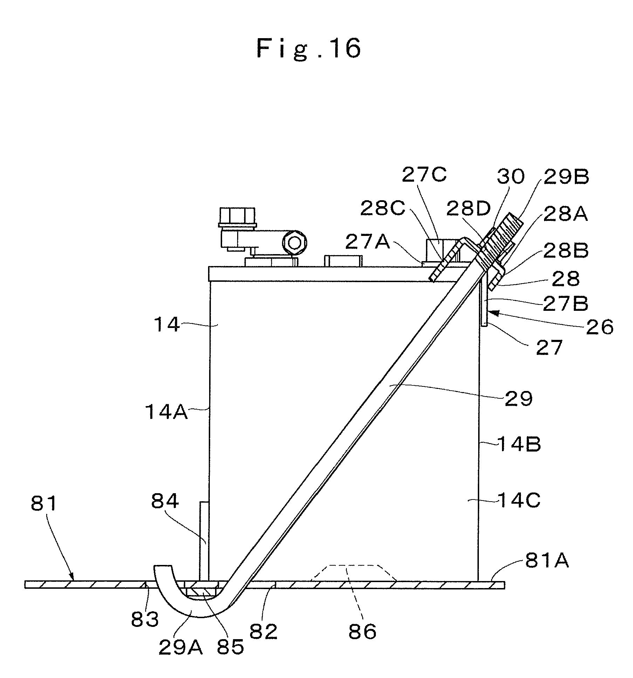

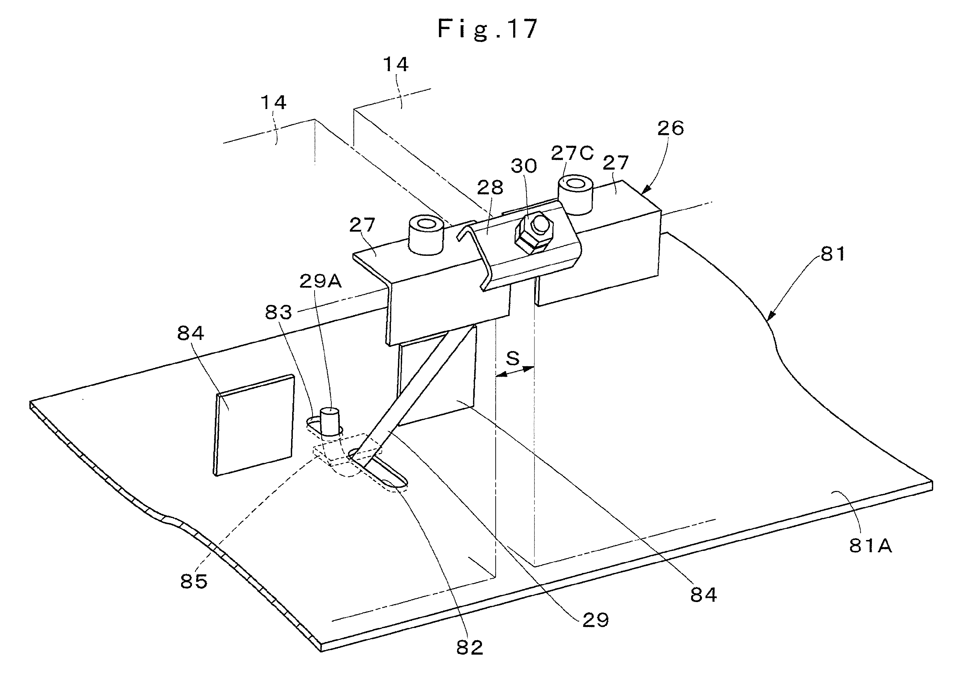

Next, Figs. 15 to 17 show a sixth embodiment of the present invention. A feature of this embodiment is that a connector locking portion is formed of two insertion holes. Incidentally, in the sixth embodiment, the component elements that are identical to those of the first embodiment described earlier will be simply denoted by the same reference numerals to avoid repetitions of similar explanations.

In the drawings, denoted at 81 is a battery platform on which two batteries 14 lying next to each other are placed with a gap S left between them, and the battery platform 81 has a placing portion 81A that extends in the front and rear directions of a hydraulic excavator 1 and has a top surface on which the batteries 14 are placed. In the placing portion 81A, insertion holes 82 and 83, plate bodies 84, a reinforce member 85, and side surface positioning portions 86, which will be described later, are provided.

Indicated at 82 and 83 are the two insertion holes as the connector locking portion provided in the battery platform 81 in positions corresponding to the gap S between the batteries 14 lying next to each other, and the insertion holes 82 and 83 are provided for locking (hooking) a hook portion 29A of a J bolt 29. The hook portion 29A of the J bolt 29 is placed through the two insertion holes 82 and 83, and these insertion holes make the hook portion 29A engage the battery platform 81. As a result, by placing the hook portion 29A of the J bolt 29 through the insertion hole 82 located at the front surface 14B side of the battery 14 and making the tip of the hook portion 29A stick out of the insertion hole 83 located at the back surface 14A side of the battery 14, it is possible to hook the hook portion 29A of the J bolt 29 on the battery platform 81 between the insertion holes 82 and 83.

Indicated at 84 are the two plate bodies as back surface positioning portions provided in the battery platform 81 with the insertion hole 83 sandwiched between them, and the plate bodies 84 position the back surfaces 14A of the batteries 14. Here, each plate body 84 is provided in place of the bending portion 23 according to the first embodiment, and each plate body 84 is formed as a projection separately from the battery platform 81 on the top surface of the battery platform 81. That is, each plate body 84 is obtained by forming a metal plate such as a steel sheet so as to have a rectangular shape, and each plate body 84 is firmly fixed to the placing portion 81A of the battery platform 81 by using welding means, for example.

Indicated at 85 is the reinforce member (the reinforcing plate) provided between the two insertion holes 82 and 83 on the under surface of the battery platform 81, and the reinforce member 85 is provided for reinforcing a part between the insertion holes 82 and 83, that is, a part on which the hook portion 29A of the J bolt 29 is hooked (locked). The reinforce member 85 is obtained by forming a metal plate body such as a steel sheet so as to have a rectangular shape and is firmly fixed to a portion between the insertion holes 82 and 83 on the under surface of the battery platform 81 by using welding means, for example. By providing the reinforce member 85, it is possible to increase the thickness of the part of the battery platform 81, the part on which the hook portion 29A of the J bolt 29 is hooked (locked), and increase the stiffness and durability of this part.

Incidentally, at the both ends of the battery platform 81 in the longitudinal direction, the side surface positioning portions 86 are provided, and the side surface positioning portions 86 position the left and right side surfaces 14C and 14D of the batteries 14 located on both sides.

The hydraulic excavator according to the sixth embodiment locks the hook portion 29A of the J bolt 29 on the insertion holes 82 and 83 of the battery platform 81 described above, and the basic action thereof is not particularly different from that of the first embodiment described earlier.

However, according to the sixth embodiment, since a configuration in which the two insertion holes 82 and 83 are provided in the battery platform 81 is adopted, it is possible to make the hook portion 29A of the J bolt 29 firmly engage the insertion holes 82 and 83. Further, since a configuration in which the reinforce member 85 is provided in a portion between the insertion holes 82 and 83 on the under surface of the battery platform 81 is adopted, it is possible to increase the stiffness and durability of the part on which the hook portion 29A of the J bolt 29 is hooked.

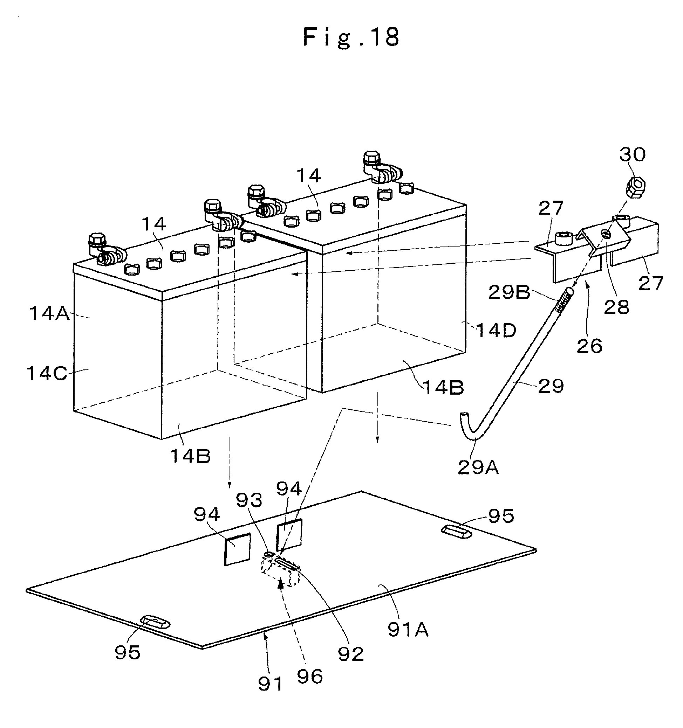

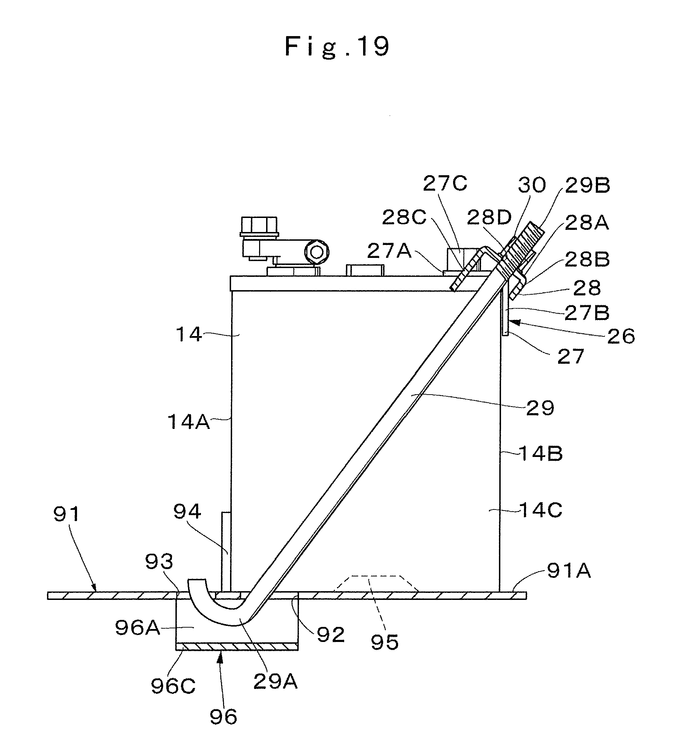

Next, Figs. 18 to 21 show a seventh embodiment of the present invention. A feature of this embodiment is that a connector locking portion is formed of two insertion holes and a guide member guiding a hook portion of a J bolt is provided on the under surface of a battery platform. Incidentally, in the seventh embodiment, the component elements that are identical to those of the first embodiment described earlier will be simply denoted by the same reference numerals to avoid repetitions of similar explanations.

In the drawings, denoted at 91 is a battery platform on which two batteries 14 lying next to each other are placed with a gap S left between them, and the battery platform 91 has a placing portion 91A that extends in the front and rear directions of a hydraulic excavator 1 and has a top surface on which the batteries 14 are placed. In the placing portion 91A, insertion holes 92 and 93, plate bodies 94, side surface positioning portions 95, and a guide member 96, which will be described later, are provided.

Indicated at 92 and 93 are the two insertion holes as the connector locking portion provided in the battery platform 91 in positions corresponding to the gap S between the batteries 14 lying next to each other, and, as is the case with the insertion holes 82 and 83 of the sixth embodiment described above, the insertion holes 92 and 93 lock a hook portion 29A of a J bolt 29.

On the other hand, in the battery platform 91, the two plate bodies 94 as back surface positioning portions are provided, and, as is the case with the plate bodies 84 of the sixth embodiment described above, the plate bodies 94 position the back surfaces 14A of the batteries 14. Moreover, at the both ends of the battery platform 91 in the longitudinal direction, the side surface positioning portions 95 are provided respectively, and the side surface positioning portions 95 position the left and right side surfaces 14C and 14D of the batteries 14 located on both sides.

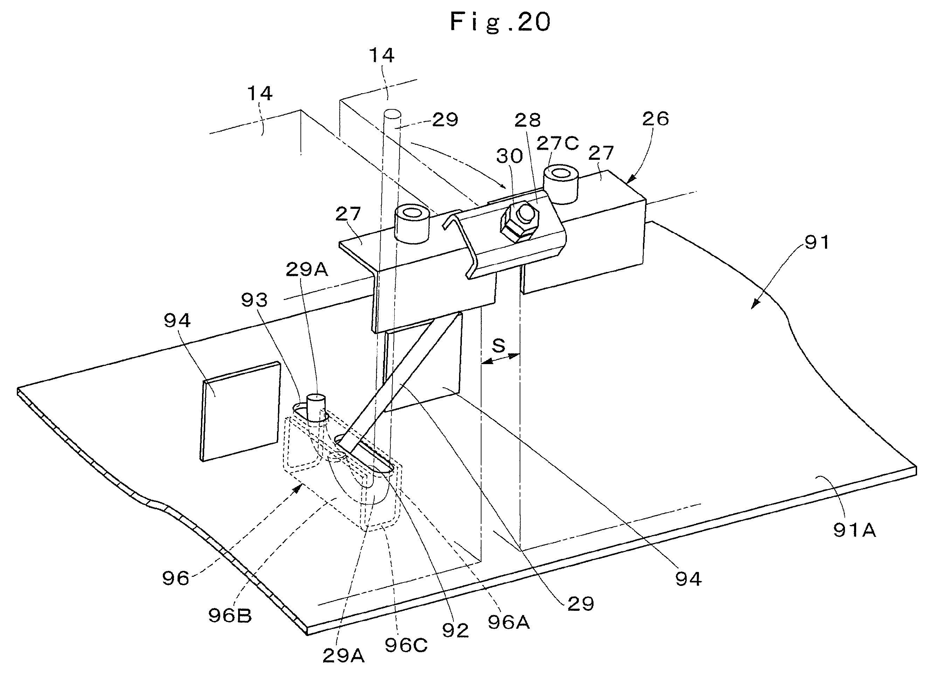

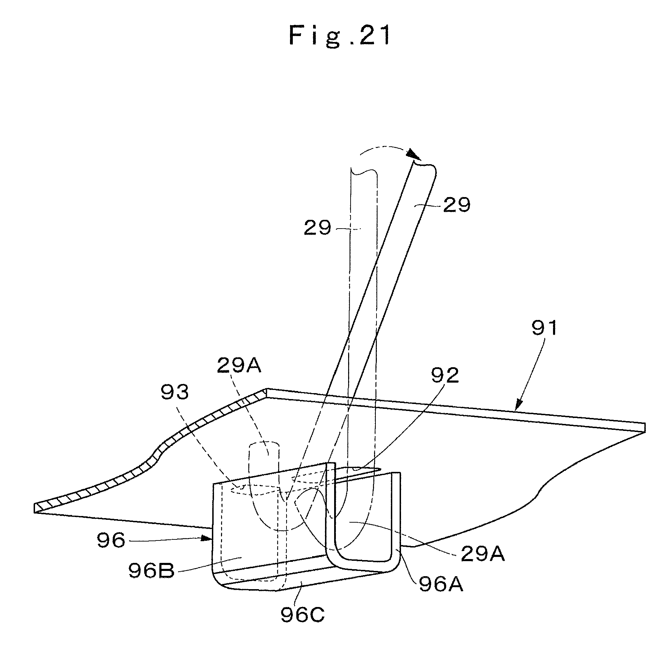

Indicated at 96 is the guide member provided in a position corresponding to the insertion holes 92 and 93 on the under surface of the battery platform 91, and the guide member 96 guides the hook portion 29A when the hook portion 29A of the J bolt 29 is hooked in the insertion holes 92 and 93. Here, the guide member 96 is obtained by bending a metal plate material such as a steel sheet so as to have a substantially U-shaped cross-sectional shape, and is formed of a pair of vertical plate parts 96A and 96B which extend in a vertical direction and are firmly fixed on their respective one ends (upper ends) to the under surface of the battery platform 91 by welding means, for example, and a lateral plate part 96C extending in a horizontal direction and connecting the lower ends of the vertical plate parts 96A and 96B. Further, as shown in Figs. 20 and 21, the guide member 96 can guide the hook portion 29A by the vertical plate parts 96A and 96B and the lateral plate part 96C when the hook portion 29A of the J bolt 29 is placed through the insertion hole 92 located at the front surfaces 14B side of the batteries 14 and the tip of the hook portion 29A is made to stick out of the insertion hole 93 located at the back surfaces 14A side of the batteries 14.

Therefore, even when the J bolt 29 moves in the front and rear directions and in the lateral direction in a state in which the hook portion 29A of the J bolt 29 is placed through the front insertion hole 92, the J bolt 29 is prevented from moving freely as a result of the hook portion 29A abutting on the vertical plate parts 96A and 96B of the guide member 96. As a result, it is possible to prevent the hook portion 29A of the J bolt 29 from shifting with respect to the insertion hole 93 located at the back surfaces 14A side of the batteries 14 and hook the hook portion 29A of the J bolt 29 in the insertion holes 92 and 93 easily.

The hydraulic excavator according to the seventh embodiment locks the hook portion 29A of the J bolt 29 in the insertion holes 92 and 93 of the battery platform 91 described above, and the basic action thereof is not particularly different from that of the first embodiment described earlier.

However, according to the seventh embodiment, since a configuration in which the two insertion holes 92 and 93 are provided in the battery platform 91 is adopted, it is possible to make the hook portion 29A of the J bolt 29 firmly engage the insertion holes 92 and 93.

In addition, according to the seventh embodiment, a configuration in which the guide member 96 guiding the hook portion 29A of the J bolt 29 is provided on the under surface of the battery platform 91 is adopted. This makes it possible to make the guide member 96 prevent the J bolt 29 from moving freely in an arbitrary direction when the hook portion 29A of the J bolt 29 is hooked in the insertion holes 92 and 93. As a result, it is possible to hook the hook portion 29A of the J bolt 29 in the insertion holes 92 and 93 easily and ensure greater easiness in assembly.

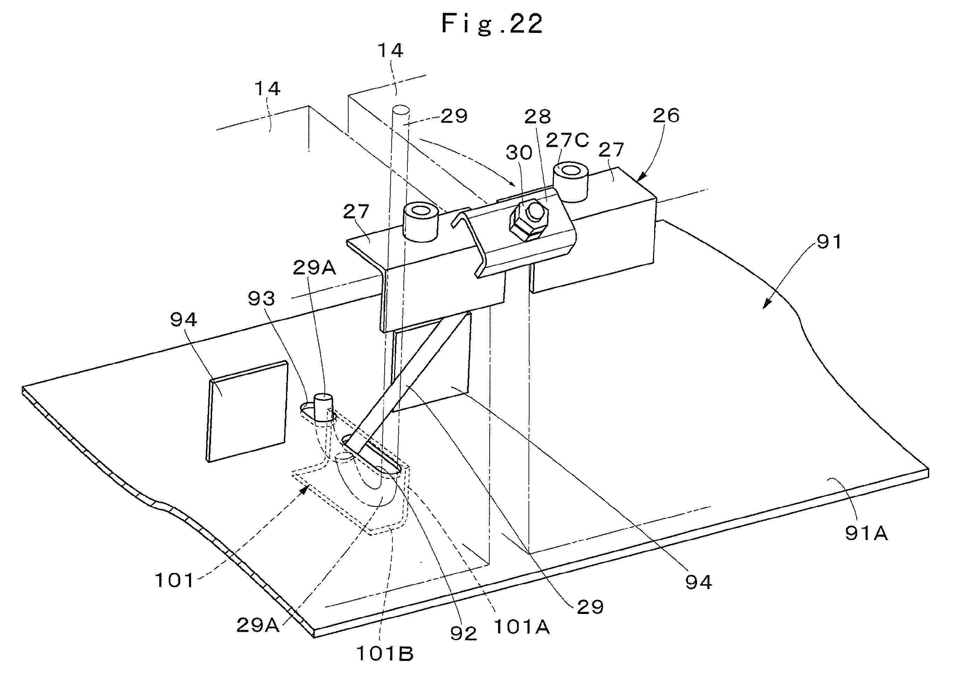

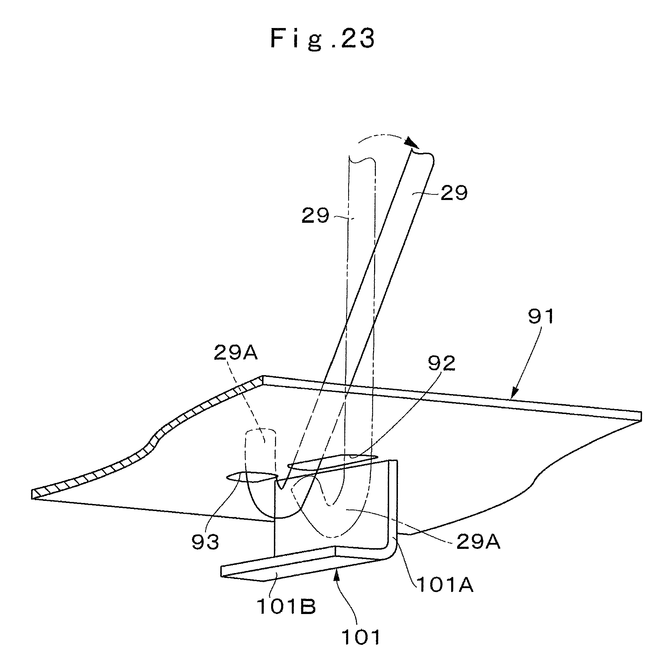

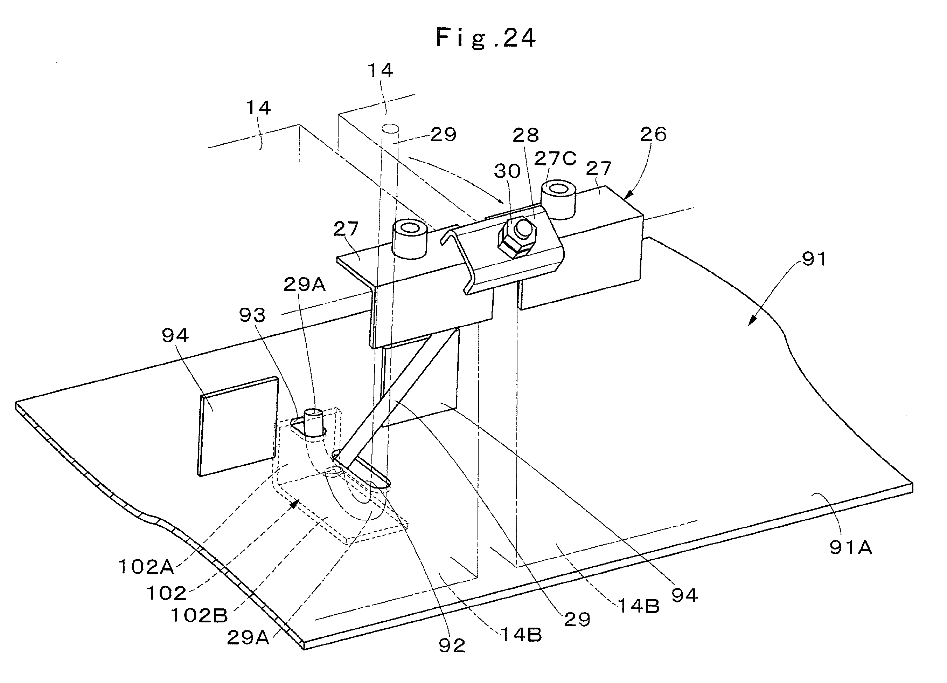

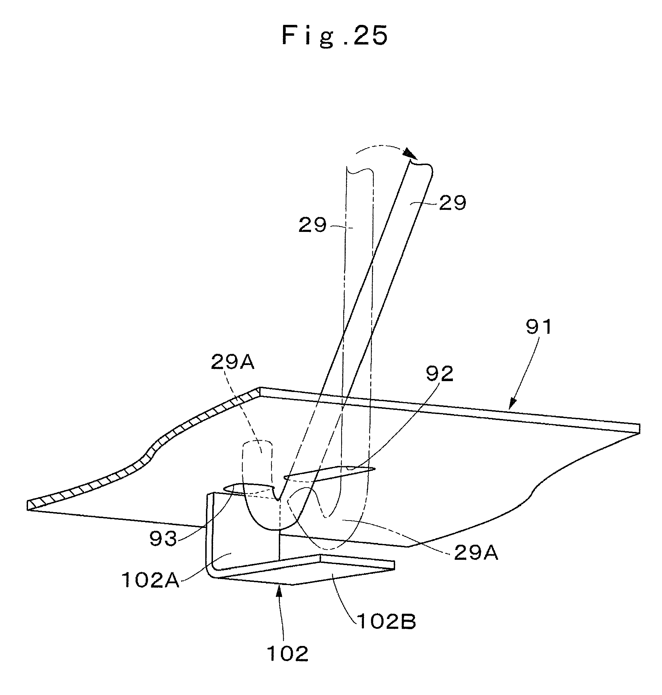

Incidentally, in the seventh embodiment described above, a description has been given of a case, as an example, where the guide member 96 having a U-shaped cross-sectional shape guides the hook portion 29A of the J bolt 29. However, the present invention is not limited thereto and may have a configuration of a first modified example shown in Figs. 22 and 23 or a configuration of a second modified example shown in Figs. 24 and 25. That is, the second modified example shown in Figs. 22 and 23 has a configuration in which a guide member 101 having an L-shaped cross-sectional shape is formed in place of the U-shaped guide member 96 and the guide member 101 guides the hook portion 29A of the J bolt 29. Here, the guide member 101 is formed of a vertical plate part 101A extending along the insertion holes 92 and 93 of the battery platform 91 and a lateral plate part 101B that is connected to a lower end of the vertical plate part 101A and extends from the lower end in the lateral direction of the batteries 14.

On the other hand, in the second modified example shown in Figs. 24 and 25, in place of the guide member 96, a guide member 102 is formed in the L-letter shape whose bending direction is different from that of the guide member 101 of the first modified example. Here, the guide member 102 is formed of a vertical plate part 102A that is provided on the the insertion hole 93 side of the battery platform 91 and extends in the lateral direction of the batteries 14 and a lateral plate part 102B that is connected to a lower end of the vertical plate part 102A and extends from the lower end to the front surfaces 14B of the batteries 14. In this case, the tip of the hook portion 29A of the J bolt 29 abuts on the vertical plate part 102A.

Also in the first modified example and the second modified example, as is the case with the seventh embodiment, it is possible to prevent the J bolt 29 from moving freely in an arbitrary direction by the guide members 101 and 102 when the hook portion 29A of the J bolt 29 is hooked in the insertion holes 92 and 93. As a result, it is possible to hook the hook portion 29A of the J bolt 29 in the insertion holes 92 and 93 easily and ensure greater easiness in assembly.

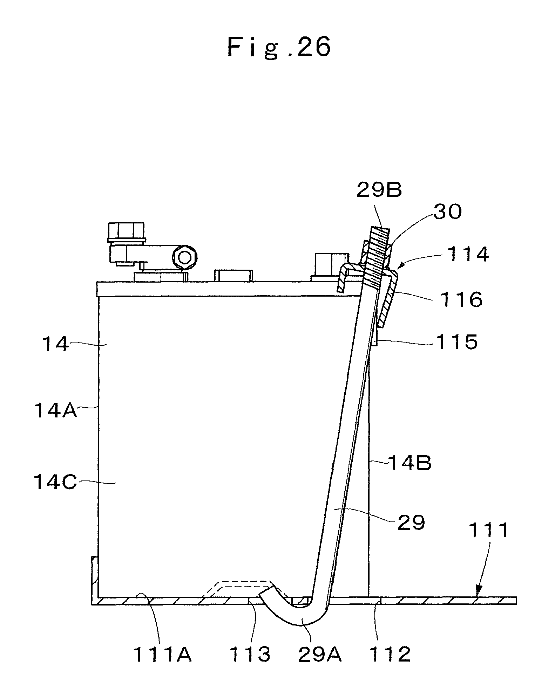

Moreover, in the embodiments described above, a description has been given of a case, as an example, where the J bolt 29 as a connector is placed through the gaps S, S1, and S2 between the batteries 14 diagonally in the direction of diagonals of the left and right side surfaces 14C and 14D of the batteries 14. However, the present invention is not limited thereto and may be configured so that, as in a third modified example shown in Fig. 26, the J bolt 29 is supported at a large angle of inclination in such a way that the J bolt 29 is erected in a vertical direction.

That is, in a position of a placing portion 111A of a battery platform 111, the position which is closer to the front surface 14B than the back surface 14A of a battery 14, two insertion holes 112 and 113 as the connector locking portion are formed. Then, by using a grip bracket 114 which is similar to the grip bracket 26 of each embodiment described above and is formed of an abutting piece 115, a connecting piece 116, and the like, the J bolt 29 may connect the grip bracket 114 and the insertion holes 112 and 113 of the battery platform 111 at a large angle of inclination and sandwich and hold each battery 14 between the grip bracket 114 and the battery platform 111.

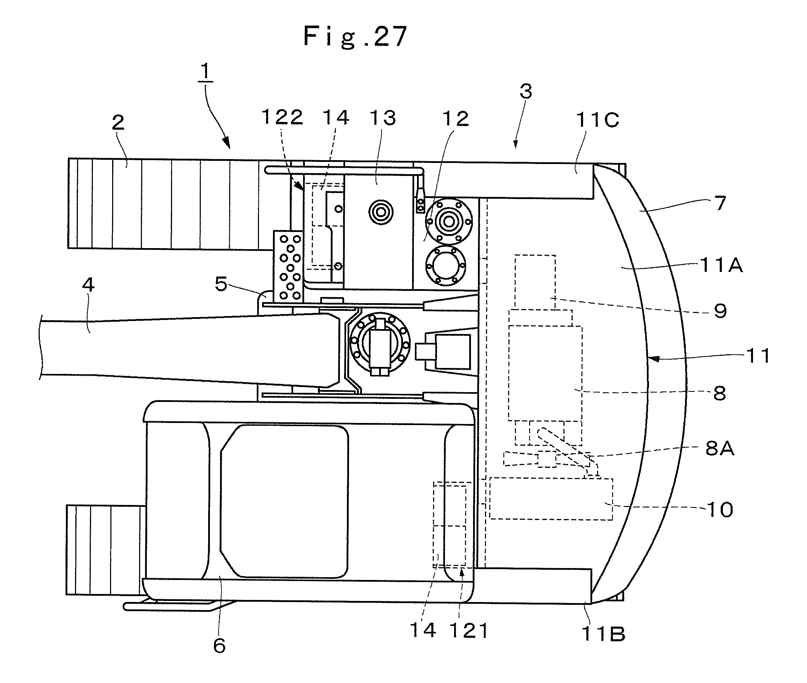

Moreover, in the embodiments described above, a description has been given of a case, as an example, where the battery fixing device 21 is provided in the back of the revolving frame 5 in the left side thereof. However, the present invention is not limited thereto and may be configured so that, as in a fourth modified example shown in Fig. 27, a battery fixing device 121 is provided in a position in the center of the revolving frame 5 in the right side thereof and behind the cab 6. On the other hand, similarly, as shown in Fig. 27, a configuration may be adopted in which a battery fixing device 122 is provided in a position in the front of the revolving frame 5 in the right side thereof, the position located in front of the fuel tank 13.

Furthermore, in the embodiments described above, a description has been given of a case, as an example, where the batteries 14 are longitudinally mounted. However, the present invention is not limited thereto, and, for example, the batteries may be transversely mounted. Also in this case, the batteries face each other with a gap left between them in the front and rear directions, and a connector is diagonally placed through the gap.

In addition, in the embodiments described above, the hydraulic excavator 1 has been taken up as an example of a construction machine. However, the present invention is not limited thereto and can be widely applied to other construction machines such as a hydraulic crane and a wheel loader.

### DESCRIPTION OF REFERENCE NUMERALS

1: Hydraulic excavator (Construction machine)
4: Working mechanism
5: Revolving frame (Frame)
8: Engine
14: Battery
14A: Back surface
14B: Front surface
21, 121, 122: Battery fixing device
22, 41, 51, 61, 71, 81, 91, 111: Battery platform
23, 42, 62, 72: Bending portion (Back surface positioning portion, projection)
24, 44, 53, 65, 77, 86, 95: Side surface positioning portion
25, 54, 63, 64, 73, 74, 75, 82, 83, 92, 93, 112, 113: Insertion hole (Connector locking portion)
26, 114: Grip bracket
29: J bolt (Connector)
29A: Hook portion
29B: Male screw portion
30: Nut
31: Battery cover (Cover)
43: Hook (Connector locking portion)
52: Block body (Back surface positioning portion, projection)
84, 94: Plate body (Back surface positioning portion, projection)
96, 101, 102: Guide member
S, S1, S2: Gap

## Claims

1. A construction machine comprising:
a frame (5) which forms a supporting structure and to which a working mechanism is attached;
an engine (8) provided on said frame (5);
a plurality of batteries (14) mounted on said frame (5) and serving as a power supply of electrical apparatuses including said engine (8); and
a battery fixing device (21, 121, 122) which fixes said batteries (14) to said frame (5), **characterized in that**:
said battery fixing device (21, 121, 122) is formed of
a battery platform (22, 41, 51, 61, 71, 81, 91, 111) which is fixed to said frame (5) and on which two batteries (14) lying next to each other among said batteries (14) are placed with a gap (S, S1, S2) left between said batteries (14),
a back surface positioning portion (23, 42, 52, 62, 72, 84, 94) provided in said battery platform (22, 41, 51, 61, 71, 81, 91, 111) on the side of back surfaces (14A) of said batteries (14) placed on said battery platform (22, 41, 51, 61, 71, 81, 91, 111) for positioning said back surfaces (14A) of said batteries (14),
a connector locking portion (25, 43, 54, 63, 64, 73, 74, 75, 82, 83, 92, 93, 112, 113) provided in said battery platform (22, 41, 51, 61, 71, 81, 91, 111) in a position corresponding to said gap (S, S1, S2) between said batteries (14) lying next to each other,
a grip bracket (26, 114) disposed across upper-end corner portions of front surfaces (14B) side of said batteries (14) lying next to each other, and
a connector (29) fixing said batteries (14) between said back surface positioning portion (23, 42, 52, 62, 72, 84, 94) and said grip bracket (26, 114) by being placed through said gap (S, S1, S2) between said batteries (14) lying next to each other and connecting said grip bracket (26, 114) and said connector locking portion (25, 43, 54, 63, 64, 73, 74, 75, 82, 83, 92, 93, 112, 113).

2. The construction machine according to claim 1, wherein said back surface positioning portion (23, 42, 52, 62, 72, 84, 94) is formed as a projection (23, 42, 52, 62, 72, 84, 94) provided on a top surface of said battery platform (22, 41, 51, 61, 71, 81, 91, 111).

3. The construction machine according to claim 1, wherein side surface positioning portions (24, 44, 53, 65, 77, 86, 95) positioning left and right side surfaces (14C, 14D) of said batteries (14) placed on said battery platform (22, 41, 51, 61, 71, 81, 91, 111) are provided in said battery platform (22, 41, 51, 61, 71, 81, 91, 111).

4. The construction machine according to claim 1, wherein said connector (29) is formed as a J bolt (29) having, at one end thereof, a hook portion (29A) which is locked in said connector locking portion (25, 43, 54, 63, 64, 73, 74, 75, 82, 83, 92, 93, 112, 113) and having, at the other end thereof, a male screw portion (29B) on which a nut (30) for fixing said grip bracket (26, 114) is threadably mounted.

5. The construction machine according to claim 4, wherein said connector locking portion (25, 54, 63, 64, 73, 74, 75, 82, 83, 92, 93, 112, 113) is formed as an insertion hole (25, 54, 63, 64, 73, 74, 75, 82, 83, 92, 93, 112, 113) for hooking provided in said battery platform (22, 51, 61, 71, 81, 91, 111).

6. The construction machine according to claim 5, wherein said connector locking portion (74, 75, 82, 83, 92, 93, 112, 113) is formed as two insertion holes (74, 75, 82, 83, 92, 93, 112, 113) provided in said battery platform (71, 81, 91, 111) in such a way that said hook portion (29A) of said J bolt (29) engages said battery platform (71, 81, 91, 111).

7. The construction machine according to claim 6, wherein a guide member (96, 101, 102) guiding said hook portion (29A) when said hook portion (29A) of said J bolt (29) is hooked in said insertion holes (92, 93) is provided in a position on an under surface of said battery platform (91) and corresponding to said insertion holes (92, 93).

8. The construction machine according to claim 4, wherein said connector locking portion (43) is formed as a hook (43) for hooking provided on a top surface of said battery platform (41).

9. The construction machine according to claim 1, wherein three batteries (14) are placed on said battery platform (71) with gaps (S1, S2) left between said batteries (14), and
by placing one connector (29) through one gap (S1) of said gaps (S1, S2) between said batteries (14) lying next to each other from the upper-end corner portions of said front surfaces (14B) of said batteries (14) to said back surfaces (14A) of said batteries (14) and placing another connector (29) through another gap (S2) of said gaps (S1, S2) between said batteries (14) lying next to each other from the upper-end corner portions of said back surfaces (14A) of said batteries (14) to said front surfaces (14B) of said batteries (14), said one connector (29) and said another connector (29) are disposed in positions in which said one connector (29) and said another connector (29) cross each other.

10. The construction machine according to claim 1, wherein a cover (31) covering top surfaces of said batteries (14) is attached to said grip bracket (26, 114).

## Amended claims

Statement under Art. 19.1 PCT
New claim 1 made it clear that "the connector diagonally connects the grip bracket and the connector locking portion" based on the descriptions "diagonally" described in paragraphs [0046], [0050], [0051], and [0108] in the specification and the descriptions "large angle of inclination" described in paragraphs [0108] and [0109] in the specification.

On the other hand, in Document 1 (JP2001-329567 A), a configuration in which a pressing member (14, 30) is displaced so as to be sandwiched between two batteries (12) placed on a battery platform (10) , a hook rod (16) is perpendicularly disposed between the pressing member (14, 30) and the battery platform (10), and the two batteries (12) are vertically sandwiched and held by using the hook rod (16) is disclosed.

In Document 2 (JP2002-173949 A), a configuration in which two batteries (12) are placed on bottom plates (21) of two cases (20), a clamp plate (30, 31) is disposed so as to be sandwiched between the batteries (12), a fixing rod (33) is perpendicularly disposed between the clamp plate (30, 31) and a locking plate (32) fixed to a revolving frame (2a), and the two batteries (12) are vertically sandwiched and held by using the fixing rod (33) is disclosed.

Here, the present invention fixes two batteries by using one connector that diagonally connects a grip bracket and a connector locking portion. Since the connector is diagonally disposed, it is possible to make a force that diagonally presses the batteries against a back surface positioning portion of a battery platform and a force that vertically presses the batteries against a placing portion of the battery platform act on the batteries concurrently.

On the other hand, since Document 1 and Document 2 fix the two batteries in a vertical direction, unlike the present invention, they cannot produce the effect of fixing the two batteries from two directions by using one connector.
